# NOUVEAU FASCICULE DE BREVET EUROPEEN

(11) **EP 0 179 723 B2**
(45) Date de publication et mention de la décision concernant l'opposition: **04.05.1994**
(45) Mention de la délivrance du brevet: 28.06.1989
(21) Numéro de dépôt: 85420168.8
(22) Date de dépôt: 19.09.1985
(51) Int. Cl.: B60K 41/02, B60K 41/22

(54) **Embrayage automatique pour automobile**
Automatische Kupplung für Brennkraftmaschine
Automatic clutch for an automotive vehicle

(30) Priorité: 21.09.1984 FR 8414887
(43) Date de publication de la demande: 30.04.1986
(73) Titulaire: RENAULT VEHICULES INDUSTRIELS Société dite:, 69003 Lyon (FR)
(72) Inventeur: Sibeud, Jean-Paul, F-69360 St. Symphorien d'Ozon (FR)
(74) Mandataire: Chassagnon, Jean Alain

(56) Documents cités:
- WO-A-82/01354
- WO-A-82/01519
- DE-A- 3 028 601
- FR-A- 2 172 622
- FR-A- 2 417 689
- GB-A- 2 069 075
- GB-A- 2 080 910
- GB-A- 2 088 007
- FEINWERKTECHNIK und MESSTECHNIK 91, (1983), Heft 5 pages 215, 216

## Description

La présente invention est relative à des perfectionnements apportés à un embrayage à commande automatique pour automobiles, correspondant au préambule de la revendication 1

On connaît des systèmes, comme ceux décrits dans le document WO-A-82/01 354, qui ont plusieurs micro-processeurs utilisés afin de relier à une commande centrale divers sous-systèmes.

Un dispositif, connu par le brevet FR-A-2 172 622, utilisait un calculateur électronique analogique, et notamment un sommàteur analogique 9, qui pilotait la commande de l'embrayage II et la commande de la pompe à injection V du moteur thermique I. Ces actions sur le régulateur d'injection étaient exercées par des vérins pneumatiques ou hydrauliques, eux-mêmes commandés par des électro-vannes qu'actionnait le calculateur d'embrayage. L'utilisation d'une pompe d'injection à régulateur mécanique, et d'un calculateur électronique de type analogique, présentait donc l'inconvénient de nécessiter l'emploi de vérins pilotés par des électro-vannes.

Un dispositif du type énoncé dans le préambule de la revendication 1 est décrit dans l'article de D. Lutz : "Automatische Kupplungs betätigung mit Mikroprozessor- Steuerung" Feinwerktechnik & Messtechnik 91 (1983) 5. Dans ce systéme connu, le conducteur peut appuyer sur l'accélérateur d'une manière lui permettant de fixer à sa guise la valeur du débit de combustible injecté. Il peut en résulter des inconvénients au démarrage, ainsi que des fausses manoeuvres ou des à-coups dans la conduite du véhicule.

La présente invention a pour but d'automatiser davantage le systeme connu et de minimiser l'énergie dissipée au démarrage notamment en côte et avec un moteur suralimenté.

En partant d'un dispositif du type énoncé dans le préambule, ce probléme est résolu par les caractéristiques indiquées dans la partie caractérisante de la revendication 1.

Grâce à cette disposition, le calculateur d'embrayage dialogue directement par des impulsions électriques, avec le régulateur électronique de la pompe d'injection, sans qu'il soit désormais nécessaire d'intercaler aucun vérin ou électro-valve.

Le dispositif selon l'invention présente les avantages suivants :
- la structure de l'actionneur d'embrayage est simplifiée ;
- la puissance nécessaire pour l'actionneur est considérablement réduite ;
- ce système s'adapte automatiquement au fur et à mesure que l'usure apparaît sur les divers organes (il n'est plus nécessaire d'effectuer des réglages ultérieurs) ;
- l'énergie dissipée dans l'embrayage se trouve considérablement réduite ;
- finalement, cela améliore nettement le comportement du véhicule, notamment dans les démarrages en côte.

Avec le dispositif objet de l'invention, le conducteur écrase la pédale d'accélérateur, mais ensuite, la gestion des débits injectés tout au long du processus de changement de vitesses se trouve entièrement automatisée.

Le dessin annexé, donné à titre d'exemple non limitatif, permettra de mieux comprendre les caractéristiques de l'invention.

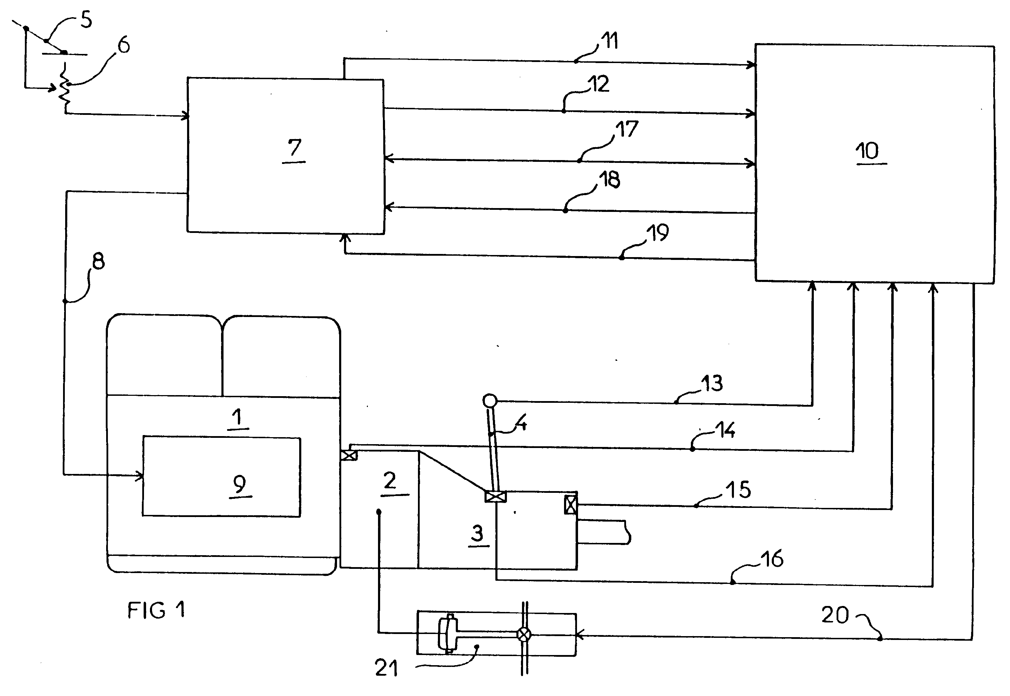

Figure 1 est un schéma bloc illustrant un mode de réalisation possible d'un dispositif selon l'addition.

Figure 2 est un schéma de séquence, du genre connu sous le nom de « ordinogramme», illustrant le mode de fonctionnement de embrayage automatique ainsi équipé.

Le dispositif illustré sur les dessins est destiné à équiper l'ensemble d'un moteur thermique 1, assemblé de façon connue, à un embrayage mécanique 2, et à une boîte à vitesses 3. Sur cette dernière, la sélection des rapports de vitesses peut être effectuée en actionnant un levier de changement de vitesses 4, lequel peut être actionné soit manuellement, par le conducteur, soit à partir d'une commande automatique.

Le conducteur du véhicule dispose, à la manière connue, d'une pédale d'accélérateur 5, dont les mouvements actionnent un potentiomètre 6, relié à un calculateur électronique 7. Ce dernier est un calculateur d'injection, d'un type en lui-même connu, qu'une ligne 8 relie à la pompe d'injection 9 du moteur 1. Le calculateur 7 commande, à chaque instant, le débit de combustible injecté par la pompe 9.

Selon l'invention, le calculateur d'injection 7 dialogue avec un calculateur d'embrayage 10. Ce dernier est un calculateur électronique à micro-processeur, qui reçoit :
par une ligne 11, l'information du débit de combustible injecté par la pompe 9 ;
par une ligne 12, l'information concernant la position de la pédale d'accélérateur 5 et son action sur le potentiomètre 6 ;
par une ligne 13, reliée au levier de changement de vitesses 4, l'ordre d'ouverture de l'embrayage, en vue de procéder à un changement de vitesses ;
par une ligne 14, indication de la vitesse de rotation du moteur 1 ;
par une ligne 15, l'indication de la vitesse de déplacement du véhicule ;
par une ligne 16, l'indication de point mort de la boîte à vitesses 3.

Par contre, une ligne 17, reliant les calculateurs 7 et 10, leur permet de dialoguer en ce qui concerne l'ordre éventuel d'inhiber l'action de la pédale d'accélérateur 5.

Enfin, du calculateur d'embrayage 10, partent :
une ligne 18, reliée au calculateur d'injection 7, pour lui imposer en consigne la vitesse du moteur 1 ;
une ligne 19, reliée au calculateur d'injection 7, pour lui imposer une variation lente du débit de combustible injecté ;
une ligne 20, reliée à un actionneur mécanique 21 capable de débrayer sur commande l'embrayage 2.

Le fonctionnement est le suivant :

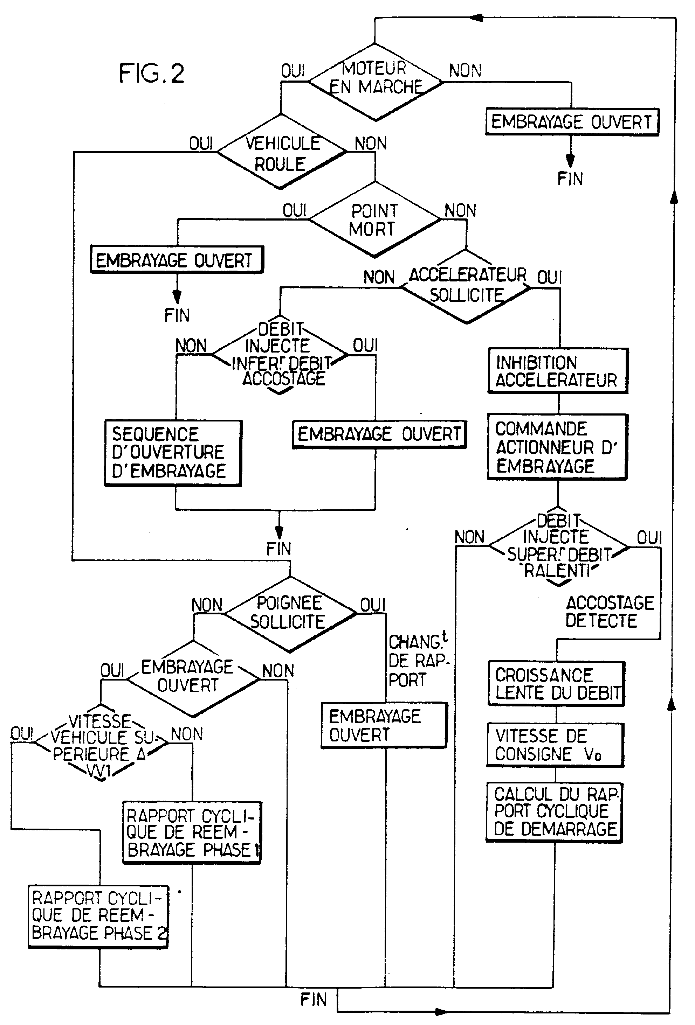

On a résumé sur l'ordinogramme de la figure 2, le déroulement schématisé du haut vers le bas, des différents processus possibles, en fonction d'une information injectée par le haut dans le dispositif selon l'addition.

Avec référence au schéma de la figure 2, on voit que les informations échangées entre les calculateurs d'embrayage 10, et d'injection 7, sont les suivantes :

Informations émises par le calculateur d'injection vers le calculateur d'embrayage : 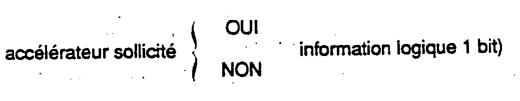
débit injecté dans le moteur : pourcentage du débit maximal injectable dans les conditions présentes :
information analogique
ou information pseudo-analogique
ou information digitale 1 byte.

Par ailleurs, les informations émises par le calculateur d'embrayage 10 vers le calculateur d'injection 7 sont les suivantes :

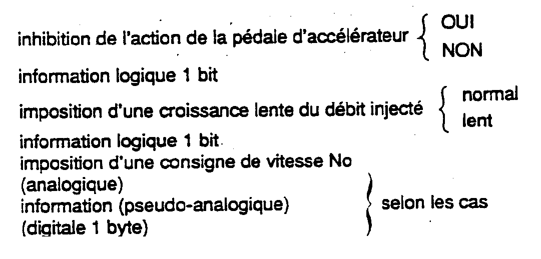

En définitive, la liaison électrique directe entre les calculateurs d'embrayage 10 et d'injection 7, permet plus de finesse et de rapidité dans les échanges d'informations, par rapport à la liaison décrite au brevet principal.

Dans la structure connue, décrite dans le document FR-A-2 172 622 précité, le calculateur d'embrayage est informé de l'action du conducteur sur la pédale d'accélérateur, par l'accroissement à partir du ralenti de la vitesse du moteur. Une surveillance constante de la vitesse du moteur et de sa dérivée première par rapport au temps permettait de détecter l'intention du conducteur de démarrer; par la mesure de la dérivée, cela permettait d'estimer s'il s'agissait d'un démarrage en douceur, ou d'un démarrage sportif. Aussitôt détectée cette intention de démarrer, le calculateur positionnait l'embrayage II au point d'accostage parce que la phase de régulation de l'embrayage ne peut débuter que lorsque la garniture d'embrayage commence à transférer le couple du moteur vers le véhicule. Cela obligeait à prévoir pour l'actionneur d'embrayage, un élément très performant, nécessitant des réglages répétés en cours d'exploitation du véhicule, et réalisant un accostage déterministe, c'est-à-dire dans des conditions fixées une fois pour toutes à l'avance.

Dans le dispositif selon l'invention, le dialogue entre les calculateurs d'embrayage 10 et d'injection 7 permet d'améliorer sensiblement cette situation, et de simplifier l'actionneur d'embrayage 21.

L'accostage de l'embrayage peut être adaptatif, ce qui supprime toute nécessité de réglage en cours d'exploitation.

L'actionneur 21 peut être beaucoup moins rapide, et des solutions n'utilisant que l'énergie électrique sont possibles. En particulier, on peut utiliser des positionneurs, qui permettent d'accepter toutes les formes de caractéristiques force/déplacement pour la commande de mécanismes d'embrayage.

Le nouveau processus d'accostage est le suivant:

La décision du calculateur d'embrayage 10 de lancer la phase d'accostage est conditionnée par les eléments suivants:
boîte à vitesses à sélecteur positionnée hors du point mort ;
vitesse véhicule nulle ;
pédale d'accélérateur sollicitée.

Cette dernière information est transmise au calculateur d'embrayage par le calculateur d'injection, en un temps très court par rapport à celui nécessaire à toute réaction mécanique.

Le calculateur d'embrayage 10 peut alors émettre vers le calculateur d'injection 7 l'ordre d'inhibition de la commande d'accélérateur. Il peut simultanément donner l'ordre à l'actionneur d'embrayage de quitter la position débrayée pour s'acheminer vers la position embrayée.

Le calculateur d'embrayage 10 surveille les taux de débit injecté dans le moteur 1, que lui transmet le calculateur d'injection 7. Lorsque ce taux quitte la valeur qu'il avait (débit nécessaire à l'entretien du moteur au ralenti à vide) avant que l'on lance l'opération d'accostage, du couple commence à être transmis du moteur vers la transmission, et l'accostage est réalisé. Ceci peut être obtenu, quelle que soit la position de cet accostage dans la course totale. C'est donc bien une opération adaptative entièrement pilotée en boucle fermée par le calculateur d'embrayage.

Si le temps le plus long nécessaire à l'accostage et correspondant au cas où la garniture est très usée, est plus court que 0,2, ou 0,5 seconde, le conducteur ne pourra pas déceler ce retard à l'exécution de son ordre.

Il y a cependant un gain important au niveau de la vitesse de l'actionneur qui, dans les réalisations initiales, devait effectuer la même opération en 0,05 seconde. La puissance de l'actionneur nouveau pourra être divisée par des facteurs de 5 à 10.

D'autre part, on part d'un accostage déterministe nécessitant des réglages au cours de l'exploitation, à un accostage adaptatif ne nécessitant aucun réglage. Ceci apporte un progrès pour l'utilisateur, et la possibilité d'un actionneur 21 tout électrique.

En ce qui concerne l'usure de l'embrayage 2, le dispositif selon l'invention présente également des avantages.

L'accostage obtenu, le calculateur d'embrayage 10 émet, vers le calculateur d'injection 7, les ordres suivants :
croissance lente du débit injecté
vitesse de consigne No.

Cette consigne No peut être la vitesse de ralenti si le moteur est capable de fournir du couple à cette vitesse. Si non, une vitesse proche de celle du ralenti, à laquelle le moteur considéré est capable de fournir un couple utile. Le calculateur d'embrayage maintient l'ordre de fermeture donné à l'actionneur d'embrayage en appliquant des procédures connues, notamment en ce qui concerne la vitesse véhicule et la détection de l'obtention du démarrage.

Si le démarrage n'a pas été obtenu lorsque l'information débit injecté dans le moteur émise par le calculateur d'injection correspond à 100 % du débit maximum injectable au régime considéré et dans les conditions présentes de fonctionnement, le calculateur d'embrayage émettra vers le calculateur d'injection une consigne de vitesse moteur No supérieure à la précédente, et ceci jusqu'à ce que l'on atteigne la vitesse à laquelle le moteur peut développer son couple maximum, ou bien que le démarrage soit obtenu selon les critères des dispositifs connus.

Lorsque le démarrage aura été obtenu, le calculateur d'embrayage cessera d'émettre les consignes d'inhibition de l'action de la pédale d'accélérateur de croissance lente du débit injecté dans le moteur de vitesse moteur No.

Dans le cas où, en cours de démarrage, le conducteur lâcherait la pédale d'accélérateur, le calculateur d'injection n'enverrait plus au calculateur d'embrayage l'information pédale d'accélérateur sollicitée.

Le calculateur d'embrayage donnerait alors l'ordre à l'actionneur de fonctionner dans le sens ouverture de l'embrayage, et ceci en surveillant le taux de carburant injecté, de manière à interrompre l'action d'ouverture d'embrayage, lorsque le taux de débit injecté atteindra la valeur qu'il avait eue au moment où a été débutée la phase d'accostage.

Si, au bout de quelques secondes, la pédale d'accélérateur n'est pas à nouveau sollicitée, le calculateur d'embrayage donnera l'ordre à l'actionneur d'aller se positionner en butée de fin de course d'ouverture.

Tout ce qui vient d'être exposé concerne un moteur à admission atmosphérique. En fait, le dispositif selon l'invention offre des avantages supplémentaires importants dans le cas d'un moteur suralimenté. En effet, le dispositif précédemment décrit permet d'accroître pas à pas le régime du moteur, avant le démarrage du véhicule (notamment pour un démarrage en côte), ce qui permet de minimiser l'énergie mécanique dissipée préalablement au démarrage dans l'embrayage 2. Cet avantage est très sensible si l'on se réfère au problème bien connu du démarrage en côte pour des véhicules à moteur suralimenté.

Dans le cas de la présente invention, il suffit de choisir, pour le moteur, un régime adéquat pour le démarrage en côte, et de le maintenir tant que le taux de débit injecté n'atteint pas 100 % du débit maximum injectable en fonctionnement suralimenté au régime considéré.

Ce procédé permet de minimiser l'usure de l'embrayage dans les démarrages en côte avec moteur suralimenté.

Enfin, le dispositif selon l'invention permet de minimiser les problèmes d'oscillation et de vibration au démarrage, du fait de la possibilité prévue pour le calculateur d'embrayage 10, d'imposer au calculateur d'injection 7, une vitesse maxima pour la croissance du débit injecté par la pompe 9. On peut ainsi piloter la croissance du couple moteur, et supprimer toute excitation des systèmes oscillants du véhicule, pour résoudre les problèmes difficiles souvent dus au couplage de ces systèmes lorsque leurs fréquences propres coïncident.

## Revendications

1. Dispositif pour automatiser l'embrayage de friction classique (2) entre le moteur thermique (1) et la boite de vitesses (3) d'un véhicule automobile en pilotant la commande de l'embrayage (2) et celle de la pompe d'injection (9) du moteur thermique (1), comportant un calculateur d'embrayage (10) de type digital utilisant un microprocesseur, ledit calculateur d'embrayage (10) recevant,
- par une ligne (12), l'information concernant la position de la pédale d'accélérateur (5) et son action sur un potentiomètre (6);
- par une ligne (13) reliée au levier de changement de vitesses (4), l'ordre d'ouverture de l'embrayage en vue de procéder à un changement de vitesses,
- par une ligne (14), l'indication de la vitesse du moteur (1),
- par une ligne (15), l'indication de la vitesse du véhicule, et
- par une ligne (16), l'indication du point mort de la boîte de vitesses (3),
caractérisé en ce qu'il comporte un calculateur d'injection (7) de type digital utilisant un microprocesseur, ledit calculateur d'injection (7) étant relié au calculateur d'embrayage (10) par une ligne d'information (11) permettant à ce dernier de surveiller le débit de carburant injecté dans le moteur (1), et par une ligne (17) permettant aux deux calculateurs (7), (10) de dialoguer, pour donner l'ordre d'inactiver au démarrage l'action de pédale d'accélérateur (5) et assurer la gestion du débit de carburant.

2. Dispositif selon la revendication 1, caractérisé en ce que du calculateur d'embrayage (10) partent :
- une ligne (18) reliée au calculateur d'injection pour lui imposer en consigne la vitesse du moteur,
- une ligne (19) reliée au calculateur d'injection (7) pour lui imposer une variation lente du débit de combustible injecté, et
- une ligne (20) reliée à un actionneur mécanique (21) capable de débrayer sur commande l'embrayage (2).

## Claims

1. An apparatus for automating the conventional friction clutch (2) between the heat engine (1) and the gearbox (3) of a motor vehicle with pilot control for actuation of the clutch (2) and actuation of the injection pump (9) of the heat engine (1), comprising a clutch computer (10) of digital type using a microprocessor, said clutch computer (10) receiving:
- by way of a line (12), information concerning the position of the accelerator pedal (5) and the action thereof on a potentiometer (6);
- by way of a line (13) connected to the gear change lever (4), the order for opening of the clutch, for proceeding with a gear change;
- by way of a line (14), indication of the speed of the engine (1);
- by way of a line (15), indication of the speed of the vehicle, and
- by way of a line (16), indication of neutral in the gearbox (3), characterised in that it comprises an injection computer (7) of digital type using a microprocessor, said injection computer (7) being connected to the clutch computer (10) by way of an information line (11) permitting the latter to monitor the flow rate of fuel injected into the engine (1) and by way of a line (17) permitting the two computers (7), (10) to dialogue, to give the order for inactivating when starting off the action of the accelerator pedal (5) and to provide for management of the fuel flow rate.

2. Apparatus according to claim 1 characterised in that the following go from the clutch computer (10):
- a line (18) connected to the injection computer for imposing the speed of the engine (1) thereon as a reference;
- a line (19) connected to the injection computer (7) for imposing thereon a slow variation in the flow rate of fuel injected; and
- a line (20) connected to a mechanical actuator (21) capable of disengaging the clutch (2) upon command.

## Patentansprüche

1. Vorrichtung zum Automatisieren der herkömmlichen Reibungskupplung (2) zwischen dem Verbrennungsmotor (1) und dem Getriebe (3) eines Kraftfahrzeuges durch Regelung der Ansteuerung der Kupplung (2) und derjenigen der Einspritzpumpe (9) des Verbrennungsmotors (1), mit einem digitalen Kupplungsrechner (10), der einen Mikroprozessor verwendet, wobei der Kupplungsrechner (10) empfängt
- über eine Leitung (12) eine Information bezüglich der Stellung des Beschleunigungspedals (5) und seine Wirkung auf ein Potentiometer (6)
- über eine Leitung (13), die mit dem Getriebewählhebel (4) verbunden ist, einen Befehl zur Öffnung der Kupplung im Hinblick auf einen Gangwechsel
- über eine Leitung (14) eine Anzeige über die Drehgeschwindigkeit des Motors (1)
- über eine Leitung (15) eine Anzeige über die Geschwindigkeit des Fahrzeuges und
- über eine Leitung (16) eine Anzeige über die Nullstellung des Getriebes (3)
dadurch gekennzeichnet, daß sie einen digitalen Einspritzrechner (7) aufweist, der einen Mikroprozessor verwendet, wobei der Einspritzrechner (7) mit dem Kupplungsrechner (10) über eine Informationsleitung (11) verbunden ist, so daß letzterer die in den Motor (1) eingespritzte Brennstoffmenge überwacht und über eine Leitung 17, die es in beiden Rechnern 7, 10 ermöglicht, Informationen auszutauschen um beim Starten den Befehl zum Unterbinden der Wirkung des Beschleunigungspedals (5) zu geben und die Verteilung der Brennstoffmenge zu gewährleisten.

2. Vorrichtung nach Anspruch 1, dadurch gekennzeichnet, daß vom Kupplungsrechner (10) ausgehen
- eine Leitung (18), die mit dem Einspritzrechner verbunden ist um ihm Informationen über die Geschwindigkeit des Motors zuzuführen
- eine Leitung (19) die mit dem Einspritzrechner (7) verbunden ist um ihm Informationen bezüglich einer langsamen Veränderung der eingespritzten Treibstoffmenge zuzuführen und
- eine Leitung (20), die mit einer mechanischen Betätigungsanordnung (21) verbunden ist, um die Kupplung (2) auszukuppeln.
